# EUROPÄISCHE PATENTSCHRIFT

(11) **EP 2 754 492 B1**
(45) Veröffentlichungstag und Bekanntmachung des Hinweises auf die Patenterteilung: **20.06.2018**
(21) Anmeldenummer: 13151264.2
(22) Anmeldetag: 15.01.2013
(51) Int. Cl.: B01L 3/00, B65D 43/02, G01N 35/04, G01N 35/10

(54) **Verschlussvorrichtung für einen Zugang zu einem Behälter für Reagenzgefässe in einem automatischen Analysegerät**
A closure device for access port of a container for reagent vessels in an automated analyzer
Dispositif de fermeture pour l'accès à un conteneur des récipients de réactifs d'un analyseur automatisé

(43) Veröffentlichungstag der Anmeldung: 16.07.2014
(73) Patentinhaber: Siemens Healthcare Diagnostics Products GmbH, 35041 Marburg (DE)
(72) Erfinder: Butz, Thomas, 65239 Hochheim am Main (DE)

(56) Entgegenhaltungen:
- JP-A- 2000 131 328
- US-A- 5 510 082
- US-A- 5 620 898
- US-A1- 2007 189 924
- US-A1- 2008 063 567

## Beschreibung

Die Erfindung betrifft eine Vorrichtung zum Verschluss einer Öffnung in einem Behälterdeckel sowie deren Verwendung in einem Behälterdeckel, der für die Abdeckung von Reagenzgefäßbehältern in automatischen Analysegeräten vorgesehen ist.

Zahlreiche Nachweis- und Analyseverfahren zur Bestimmung physiologischer Parameter in Körperflüssigkeitsproben wie Blut, Plasma, Serum oder Urin oder in anderen biologischen Proben werden automatisiert in entsprechenden Analysegeräten durchgeführt.

Heutige Analysegeräte sind in der Lage, eine Vielzahl verschiedenartiger Nachweisreaktionen und Analysen mit einer Vielzahl von Proben durchzuführen. Gängige Analysegeräte, wie sie im klinischen Labor oder in Blutbanken zum Einsatz kommen, umfassen üblicherweise einen Bereich für die Zuführung von Probengefäßen, die die zu analysierenden Primärproben enthalten. Zur Einspeisung der Probengefäße in das Analysegerät ist üblicherweise ein Transportsystem vorgesehen, das die Probengefäße zunächst zu einer Probenidentifikationseinrichtung transportiert, die probenspezifische Informationen, die auf einem Probengefäß angebracht sind, erfasst und in eine Speichereinheit weiterleitet. Anschließend werden die Probengefäße zu einer Probenentnahmestation transportiert. Mit Hilfe einer Probenpipettiereinrichtung wird dort mindestens ein Aliquot der Probenflüssigkeit aus einem Probengefäß entnommen und in ein Reaktionsgefäß transferiert.

Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien im Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weiterleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Die Reagenzien, die für die Bereitstellung von verschiedenartigen, testspezifischen Reaktionsansätzen erforderlich sind, werden üblicherweise in entsprechenden ein- oder mehrkammrigen Reagenzgefäßen in einem Reagenzgefäßbehälter einer Reagenzstation in dem Gerät gelagert. Dieser weist aufgrund der Vielzahl unterschiedlicher durchzuführender Analysen typischerweise eine Vielzahl von Aufnahmepositionen für Reagenzgefäße auf und weist in vielen Fällen zudem eine Kühleinheit auf, um die Haltbarkeit der Reagenzien zu gewährleisten. Auf den Reagenzvorrat greift das Analysegerät automatisiert zu und entnimmt bedarfsweise mittels eines Transferarms mit einer Pipettiereinrichtung die für die jeweilige Analyse benötigten Reagenzien.

Um die Kühlung der Reagenzien nicht zu energieintensiv zu gestalten, ist der Reagenzgefäßbehälter typischerweise aufwändig isoliert und umfasst einen Behälterdeckel. Nichtsdestotrotz muss in dem Behälterdeckel mindestens eine Öffnung verbleiben, um die benötigten Flüssigreagenzien mittels der Pipettiereinrichtung entnehmen zu können. Da Pipettiereinrichtungen in Form von Hohlnadeln einen verhältnismäßigen geringen Durchmesser aufweisen und zudem äußerst präzise bewegt werden können, können die Öffnungen im Behälterdeckel, die für den Durchtritt einer Pipettiernadel vorgesehen sind, verhältnismäßig klein gehalten werden. Der Wärmeaustausch, der durch Pipettierlöcher oder -schlitze im Behälterdeckel erfolgt, ist daher vergleichsweise unproblematisch. Problematischer ist der Wärmeaustausch durch Öffnungen im Behälterdeckel, durch die der Austausch von Reagenzgefäßen möglich sein soll. Die Abmessungen derartiger Öffnungen sind wesentlich größer die der Pipettierlöcher, damit ein Reagenzgefäß durch die Öffnung in den Reagenzgefäßbehälter eingesetzt oder aus ihm entnommen werden kann. Ein Reagenzgefäßbehälter mit einem Behälterdeckel, der ein Pipettierloch sowie eine Öffnung für den Austausch für Reagenzgefäßen aufweist, ist aus EP-A1-1918721 und US5510082 bekannt.

Der vorliegenden Erfindung lag damit die Aufgabe zugrunde, einen Behälterdeckel mit Öffnungen bereit zu stellen, der einen verminderten Wärmeaustausch zwischen Behälterinnerem und Behälterumgebung aufweist.

Die Aufgabe wird dadurch gelöst, dass eine Verschlussvorrichtung für eine Öffnung in dem Behälterdeckel bereit gestellt wird, womit die Öffnung während eines Zugriffsvorgangs geöffnet und außerhalb eines Zugriffsvorgangs verschlossen werden kann. Die erfindungsgemäße Verschlussvorrichtung erlaubt eine dichte und isolierende Verschließung der Öffnung des Behälterdeckels und eine Minimierung der Öffnungszeit beim automatischen Öffnen und Verschließen.

Gegenstand der vorliegenden Erfindung ist also eine Vorrichtung zum Verschluss einer Öffnung in einem Behälterdeckel. Die Vorrichtung umfasst ein Befestigungselement zur Befestigung der Vorrichtung an dem Behälterdeckel, ein Verschlusselement, das mit dem Befestigungselement beweglich verbunden ist und das in einer Geschlossenstellung die Öffnung des Behälterdeckels bedeckt und in einer Offenstellung die Öffnung des Behälterdeckels nicht bedeckt. Die Vorrichtung umfasst ferner eine Führungsschiene, die mit dem Befestigungselement und mit dem Verschlusselement jeweils beweglich verbunden ist. Auf die Führungsschiene kann eine Horizontalkraft einwirken, wodurch das Verschlusselement von der Geschlossenstellung in die Offenstellung beweglich ist. Das Befestigungselement und das Verschlusselement sind über ein Paar parallel angeordneter Hebel verbunden. Jeder der Hebel ist in einem Befestigungselement-seitigen Lager und in einem Verschlusselement-seitigen Lager drehbar gelagert, wobei die Lager eine Drehachse senkrecht zum Verschlusselement aufweisen. Die Führungsschiene ist an jedem Hebel über jeweils ein Lager drehbar gelagert, wobei dieses Lager ebenfalls eine Drehachse senkrecht zum Verschlusselement aufweist.

Die erfindungsgemäße Verschlussvorrichtung hat zusätzlich zu der oben bereits beschriebenen Isolierfunktion den Vorteil, dass sie sowohl manuell als auch automatisiert geöffnet werden kann, sofern ein bewegliches Bauteil vorgesehen ist, dass zum Zeitpunkt, in dem der Zugriff auf das Behälterinnere gewünscht ist, eine Horizontalkraft auf die Führungsschiene ausüben kann. Diese vorteilhafte Bedienweise wird weiter unten am Beispiel eines Reagenzgefäßbehälters in einem automatischen Analysegerät beschrieben.

Durch Betätigung der Führungsschiene, d.h. durch das Ausüben einer Horizontalkraft, wird das Verschlusselement, das vorzugsweise plattenförmig ausgestaltet ist, innerhalb einer Ebene verschoben.

Die Anbringung der Führungsschiene an den Hebeln, die das Verschlusselement und das Befestigungselement verbinden, ermöglicht es, die Verschiebung des Verschlusselements über einen Hebel im physikalischen Sinne zu erreichen, d.h. eine Erhöhung der Verschiebedistanz auf Kosten eines höheren Kraftaufwands zu erreichen. Hierdurch ist es möglich, eine vollständigere Öffnung des Verschlusselements und bessere Erreichbarkeit des Behälterinneren zu erzielen. Die Lager zur drehbaren Lagerung der Führungsschiene können an jedem Punkt der Hebel angebracht sein, solange der Punkt einen hinreichenden Abstand von dem Befestigungselement-seitigen Lager eines Hebels hat. Die Lager zur drehbaren Lagerung der Führungsschiene können auch derart an den Hebeln angeordnet sein, dass sie dieselbe Drehachse aufweisen wie die Verschlusselement-seitigen Lager für die Hebel.

Begreift man die beiden Befestigungselement-seitigen und die beiden Verschlusselement-seitigen Lager der beiden parallel angeordneten Hebel als Eckpunkte eines Parallelogramms, so entspricht die Verschiebung des Verschlusselements einer Veränderung der Winkel des Parallelogramms.

In einer bevorzugten Ausführungsform entspricht die Geschlossenstellung, in der das Verschlusselement die Öffnung des Behälterdeckels bedeckt, einer Position, in der die Innenwinkel des Parallelogramms 90 Grad betragen. In einer derartigen Position ist die maximale Entfernung des Verschlusselements vom Befestigungselement erreicht. Wiederum wird hierdurch die Verschiebedistanz maximiert mit den beschriebenen Vorteilen.

In weiterer vorteilhafter Ausgestaltung weist die Seite des Parallelogramms, die die Verschlusselement-seitigen Lager miteinander verbindet, eine größere Länge als eine der anderen Seiten auf. Bei einer derartigen Dimensionierung wird ermöglicht, dass die Hebel so weit schwenken können, dass sie in einer Offenstellung, in der das Verschlusselement die Öffnung des Behälterdeckels nicht bedeckt, in einer Linie liegen, d.h. alle Lager in einer Linie angeordnet sind. Dies ermöglicht eine noch weitere Öffnung der Deckelplatte und maximiert wiederum die Verschiebedistanz mit den oben beschriebenen Vorteilen.

Bevorzugterweise ist die Führungsschiene parallel zu einer gedachten Verbindungslinie zwischen den Verschlusselement-seitigen Lagern angeordnet.

Weiterhin bevorzugt weist die Führungsschiene entlang ihrer Längsachse einen ersten, in Richtung des Befestigungselements abknickenden Abschnitt und einen zweiten, geraden Abschnitt auf. Dies hat den Vorteil, dass ein etwaiges bewegliches Bauteil (zum Beispiel ein Abschnitt einer Vorrichtung zum Austausch von Reagenzgefäßen in/aus einem Reagenzgefäßbehälter), das zum Zeitpunkt, in dem der Zugriff auf das Behälterinnere gewünscht ist, an das abknickende Ende der Führungsschiene herangeführt werden kann und eine Horizontalkraft auf die Führungsschiene ausüben kann. Wird das Bauteil parallel zur Führungsschiene bewegt, wird durch die abknickende Form des Endes das Verschlusselement beiseite geschoben. Erreicht das Bauteil den geraden Abschnitt der Führungsschiene, verbleibt das Verschlusselement in der offenen Stellung.

Vorteilhafterweise ist der abknickende Abschnitt der Führungsschiene wellenförmig ausgestaltet, d.h. ohne Kanten, sondern mit sich stetig ändernder Biegung. Wird ein bewegliches Bauteil entlang der Führungsschiene geführt, wird durch die Wellenform des abknickenden Abschnittes der Führungsschiene die Reibung reduziert, und ein eventuelles Verkanten wird verhindert. Das automatische Verschlusssystem wird dadurch weniger fehleranfällig.

In weiterer vorteilhafter Ausgestaltung umfasst die erfindungsgemäße Verschlussvorrichtung mindestens ein Rückstellelement, das mindestens einem der Lager der beiden Hebel oder der Führungsschiene zugeordnet ist und das bewirkt, dass das Verschlusselement von der Offenstellung in die Geschlossenstellung bewegt wird.

Bevorzugterweise ist das Rückstellelement ein Federelement, beispielsweise in Form einer Schenkelfeder, Zugfeder oder Druckfeder. Geeignet ist insbesondere eine Schenkelfeder, deren erster Schenkel mit dem Befestigungselement und deren zweiter Schenkel mit einem der Hebel verbunden ist.

Vorzugsweise wirkt das Rückstellelement in eine Position zurückstellend, in der die Innenwinkel des oben beschriebenen Parallelogramms 90 Grad betragen.

In einer weiteren Ausführungsform der erfindungsgemäßen Verschlussvorrichtung ist der Geschlossenstellung, in der das Verschlusselement die Öffnung des Behälterdeckels bedeckt, ein Anschlag zugeordnet, und das Rückstellelement übt eine Kraft in Richtung des Anschlags aus.

Ein weiterer Gegenstand der vorliegenden Erfindung betrifft einen Behälterdeckel mit mindestens einer Öffnung, bei dem eine oben beschriebene Verschlussvorrichtung an der Öffnung angeordnet ist. Die Verschlussvorrichtung ist über das Befestigungselement mit dem Behälterdeckel verbunden. Die Verbindung kann lösbar oder nicht lösbar sein. Eine lösbare Verbindung kann z.B. eine Schraubverbindung sein. Eine nicht lösbare Verbindung kann z.B. eine Schweißung, Klebung oder Nietverbindung sein.

Bei einer besonderen Ausführungsform des Behälterdeckels ist der Rand der Öffnung des Behälterdeckels geneigt, und das Verschlusselement weist eine dieser Randneigung entsprechende Keilform auf. Dies hat den Vorteil, dass das Verschlusselement, wenn es horizontal von der Geschlossen- in die Offenstellung bewegt wird, ohne nennenswerte Reibung von der Öffnung weg gleitet. Gleichzeitig wird in der Geschlossenstellung ein Anpressdruck erzielt, so dass die Öffnung dicht verschlossen ist.

Ein weiterer Gegenstand der vorliegenden Erfindung betrifft einen Reagenzgefäßbehälter für ein automatisches Analysegerät mit einem oben beschriebenen Behälterdeckel. Der Behälterdeckel kann mit dem Reagenzgefäßbehälter verbunden oder lediglich formschlüssig aufgesetzt sein. Eine Verbindung kann beispielsweise über ein Scharnier oder ein Gewinde hergestellt werden.

Vorzugsweise weist der Reagenzgefäßbehälter mehrere Aufnahmepositionen für Reagenzgefäße sowie ein Transportsystem zur Bewegung der Aufnahmepositionen mit den Reagenzgefäßen auf. Das Transportsystem kann linear ausgestaltet sein, oder es kann sich um ein sich um eine senkrechte Achse rotierendes Transportsystem, wie z.B. ein drehbares Rad oder einen drehbaren Teller, handeln.

Eine besondere Ausführungsform des Reagenzgefäßbehälters umfasst ein drehbares Rad mit Aufnahmepositionen für Reagenzgefäße, wobei sich die Öffnung des Behälterdeckels ausgehend vom Mittelpunkt des Aufnahmerades in radialer Richtung erstreckt. Bei derartigen Reagenzgefäßbehältern mit konzentrisch angeordneten Kreisen von Aufnahmepositionen für Reagenzgefäße wird der Zugriff auf einen bestimmten Reagenzbehälter durch Drehung des Aufnahmerades und Positionierung eines gewünschten Reagenzbehälters unter der Öffnung im Behälterdeckel möglich.

Vorzugsweise ist die Öffnung in dem Behälterdeckel des Reagenzgefäßbehälters so ausgestaltet, dass Reagenzgefäße durch die Öffnung in den Reagenzgefäßbehälter einsetzbar und aus dem Reagenzgefäßbehälter entnehmbar sind. Alternativ ist die Öffnung in dem Behälterdeckel so ausgestaltet, dass eine Pipettiervorrichtung durch die Öffnung Zugriff auf ein Reagenzgefäß hat.

Ein bevorzugter Reagenzgefäßbehälter umfasst eine Kühleinheit zur Kühlung des Behälterinnenraums, beispielsweise ein Peltier-Element.

Ein weiterer Gegenstand der vorliegenden Erfindung betrifft ein automatisches Analysegerät mit einem erfindungsgemäßen Reagenzgefäßbehälter und mit einer Vorrichtung zum Einsetzen und zur Entnahme von Reagenzgefäßen in/aus dem Reagenzgefäßbehälter, wobei die besagte Vorrichtung eine Einrichtung zur Aufnahme eines Reagenzgefäßes, vorzugsweise einen Greifer, aufweist. Die Vorrichtung zum Einsetzen und zur Entnahme von Reagenzgefäßen umfasst vorzugsweise einen parallel zur Führungsschiene der erfindungsgemäßen Verschlussvorrichtung bewegbaren Transferarm, welcher eine Horizontalkraft auf die Führungsschiene ausüben kann. Dies hat den besonderen Vorteil, dass die an dem Deckel des Reagenzgefäßbehälters befestigte Verschlussvorrichtung automatisch zu dem Zeitpunkt betätigt werden kann, in dem sich die Vorrichtung zum Einsetzen und zur Entnahme von Reagenzgefäßen dem Reagenzgefäßbehälter nähert, um einen Reagenzgefäßtransfer vorzunehmen.

In einer vorteilhaften Ausführungsform weist der Transferarm, an dem der Greifer befestigt ist, ein Kontaktelement auf, vorzugsweise eine Rolle, das in die Führungsschiene der Verschlussvorrichtung am Behälterdeckel eingreift. Dies reduziert die Reibung an der Führungsschiene und reduziert die Fehleranfälligkeit. Zudem ist durch die geringere Reibung ein geringerer Materialverschleiß zu erwarten, was die Lebensdauer des Systems erhöht.

Die mit der Erfindung erzielten Vorteile bestehen insbesondere darin, dass durch die mechanische Betätigung der Verschlussvorrichtung mittels einer Führungsschiene an einem parallel verschiebbaren, selbstrückstellenden Verschlusselement eine besonders einfache und bedarfsweise Abdichtung eines Reagenzgefäßbehälters in einem automatischen Analysegerät erreicht werden kann. Der beschriebene Verschlussmechanismus dichtet den Reagenzgefäßbehälter während Phasen des Nichtzugriffs zuverlässig ab und reduziert so den Wärmeeintrag.

Ein Ausführungsbeispiel der Erfindung wird anhand einer Zeichnung näher erläutert. Darin zeigen:
- FIG 1: eine erfindungsgemäße Verschlussvorrichtung,
- FIG 2: die Verschlussvorrichtung in Geschlossenstellung, angeordnet an der Öffnung eines Behälterdeckels,
- FIG 3: eine Schnittzeichnung der Verschlussvorrichtung in Geschlossenstellung, angeordnet an der Öffnung eines Behälterdeckels,
- FIG 4: eine Verschlussvorrichtung in Geschlossenstellung mit einem Transferarm mit einer Greifvorrichtung,
- FIG 5: eine Verschlussvorrichtung in Offenstellung mit einem Transferarm mit einer Greifvorrichtung, und
- FIG 6: einen Ausschnitt aus einem automatischen Analysegerät mit einem Reagenzgefäßbehälter und einer Vorrichtung zum Einsetzen und zur Entnahme von Reagenzgefäßen.

Gleiche Teile sind in allen Figuren mit denselben Bezugszeichen versehen.

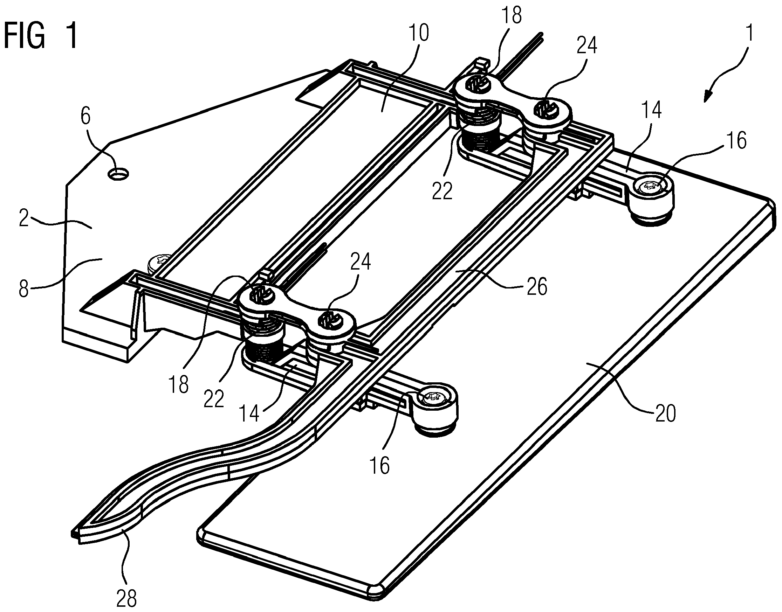

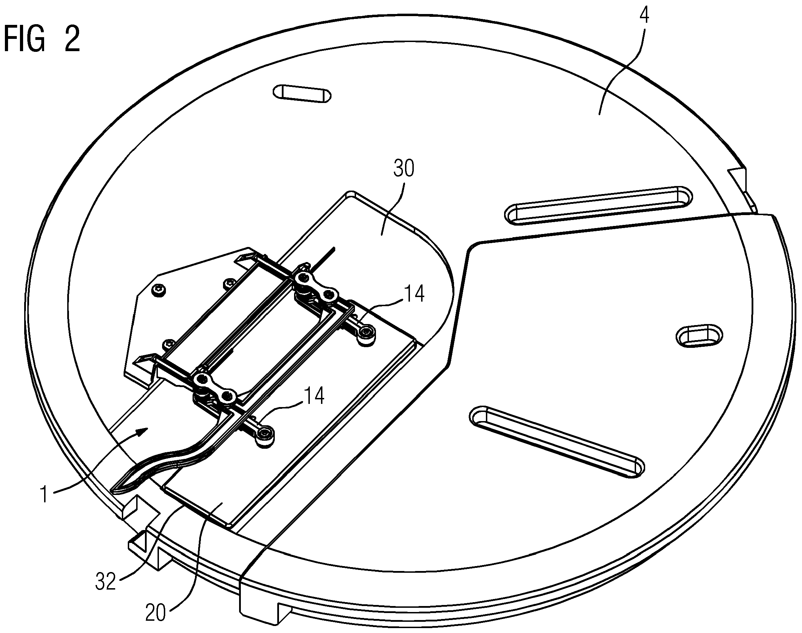

FIG 1 zeigt eine Verschlussvorrichtung 1, die sich zum Verschluss einer Öffnung in einem Behälterdeckel eignet. Die Verschlussvorrichtung 1 umfasst zunächst ein Befestigungselement 2 zur Montage an einem Behälterdeckel, beispielweise an einem Deckel eines Reagenzgefäßbehälters (siehe FIG 2). Hierzu weist das Befestigungselement 2 Montagebohrungen 6 auf. Das Befestigungselement 2 umfasst eine Grundplatte 8 sowie eine zu dieser planparallel erhöhte Platte 10, die über die Grundplatte 8 hinausragt. Die Platte 10 ist dabei im Wesentlichen rechteckig ausgestaltet und weist an den Enden ihrer aus Sicht der Grundplatte 8 distalen Kante zwei als Gleitlager ausgestaltete Befestigungselement-seitige Lager 18 auf, deren Achsen senkrecht zur Oberfläche der Platte 10 ausgerichtet sind.

In den Lagern 18 sind jeweils zwei identische Hebel 14 über einen axialen Stift gelagert, die im Wesentlichen stabförmig ausgestaltet sind und an ihren Enden ebenfalls als Gleitlager ausgestaltete Verschlusselement-seitige Lager 16 aufweisen, deren Achsen parallel ausgerichtet sind. Die Verschlusselement-seitigen Lager 16 sind an einem rechteckigen Verschlusselement 20 mit keilförmigem Profil angeordnet. Die Lager 18, 16 bilden dabei ein Rechteck und sind somit parallelogrammartig verschiebbar.

Den an dem Befestigungselement 2 befestigten Befestigungselement-seitigen Lagern 18 ist jeweils eine Schenkelfeder 22 zugeordnet, deren Schenkel dem Befestigungselement 2 bzw. den Hebeln 14 zugeordnet sind. Die Kraftwirkung der Schenkelfedern 22 wirkt aus Sicht des Befestigungselements 2 nach rechts.

Auf etwa einem Drittel der Länge der Hebel 14 aus Sicht des Befestigungselements 2 sind jeweils weitere Stifte angeordnet, die parallel zu den übrigen Lagerachsen ausgerichtet sind. Auf den Stiften sind wiederum als Gleitlager ausgestaltete Lager 24 angeordnet. Diese sind an einer in Richtung des Verschlusselements 20 beabstandet angeordneten Führungsschiene 26 befestigt. Die Führungsschiene 26 ist parallel zu einer die Verschlusselement-seitigen Lager 16 verbindenden Linie ausgerichtet.

Zwischen den Lagern 24 verläuft die Führungsschiene 26 gerade. In Federkraftrichtung ist sie verlängert und weist einen abknickenden Abschnitt 28 auf, der wellenförmig ausgestaltet ist. Der Abschnitt 28 biegt sich zunächst um ca. dreißig Grad in Richtung des Befestigungselements 2, weist dann eine Rückbiegung zu einem Sattel auf, die fast parallel zum geraden Bereich der Führungsschiene 26 ausgerichtet ist, um sich dann wiederum zu einem spitzen Auslauf in Richtung des Befestigungselements 2 zu biegen.

FIG 2 ist eine Aufsicht auf einen kreisrunden Deckel 4, der sich zum Abdecken eines Reagenzgefäßbehälters eignet, mit einer Verschlussvorrichtung 1. In dem nicht gezeigten Reagenzbehälter sind mehrere konzentrische Kreise von Aufnahmepositionen für Reagenzgefäße auf einem drehbaren Rad angeordnet. Der Zugriff auf die Reagenzgefäße erfolgt über einen Greifer oder eine Pipettiereinrichtung. Der Behälterdeckel 4 weist eine in FIG 2 von Verschlusselement 20 verdeckte rechteckige Öffnung auf. Die Öffnung ist vom Mittelpunkt des Deckels 4 aus in radialer Richtung erstreckt, entsprechend ist die Verschlussvorichtung 1 angeordnet. Der Zugriff auf jede Aufnahmeposition ist somit gewährleistet, da durch Drehung des Rades unter dem Deckel 4 und radiale Bewegung des Greifers oder der Pipettiereinrichtung über der Öffnung jeder Punkt auf dem Rad erreichbar ist.

Die Öffnung ist in eine Vertiefung 30 eingelassen, deren Länge der Summe der Seitenlängen des Verschlusselements 20 entspricht und deren Breite der zweifachen Breite Verschlusselements 20 entspricht. Das Verschlusselement 20 wird innerhalb der Vertiefung 30 verschoben. Durch die Dimensionierung der Vertiefung 30 können die Hebel 14 maximal um neunzig Grad gedreht werden. In der in FIG 2 gezeigten geschlossenen Position wird die Rückstellkraft der Federn durch einen Anschlag 32 begrenzt, der aus einer Kante der Vertiefung 30 gebildet ist. Um die Öffnung umlaufend ist eine Dichtung angeordnet, die zum Anschlag 32 hin ansteigend ausgebildet ist und somit passend zur Keilform des Verschlusselements 20 geformt ist. Durch die Keilform in Verbindung mit der Form der Dichtung wird somit im geschlossenen Zustand ein Anpressdruck und somit ein dichtes Abschließen erreicht.

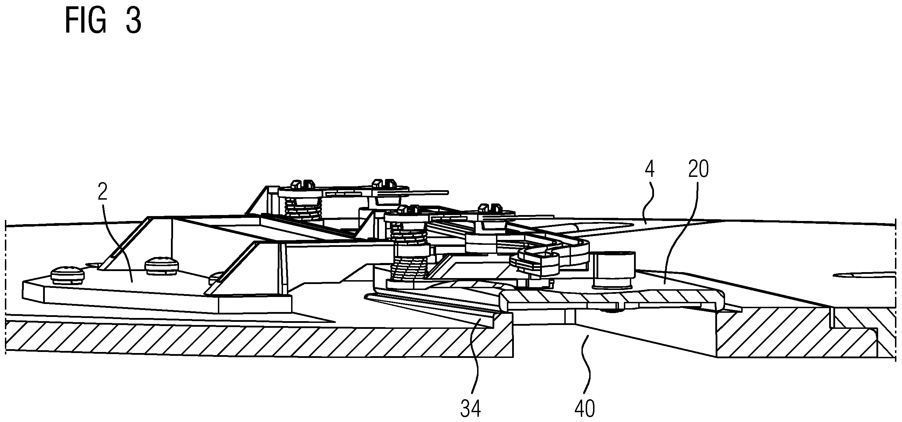

FIG 3 zeigt die Anordnung aus FIG 2, die Verschlussvorrichtung 1 in Geschlossenstellung, angeordnet an der Öffnung 40 eines Behälterdeckels 4, in einer Schnittzeichnung. FIG 3 zeigt deutlicher die Öffnung 40 mit der Dichtung 34 sowie die Keilform des Verschlusselements 20 im geschlossenen Zustand.

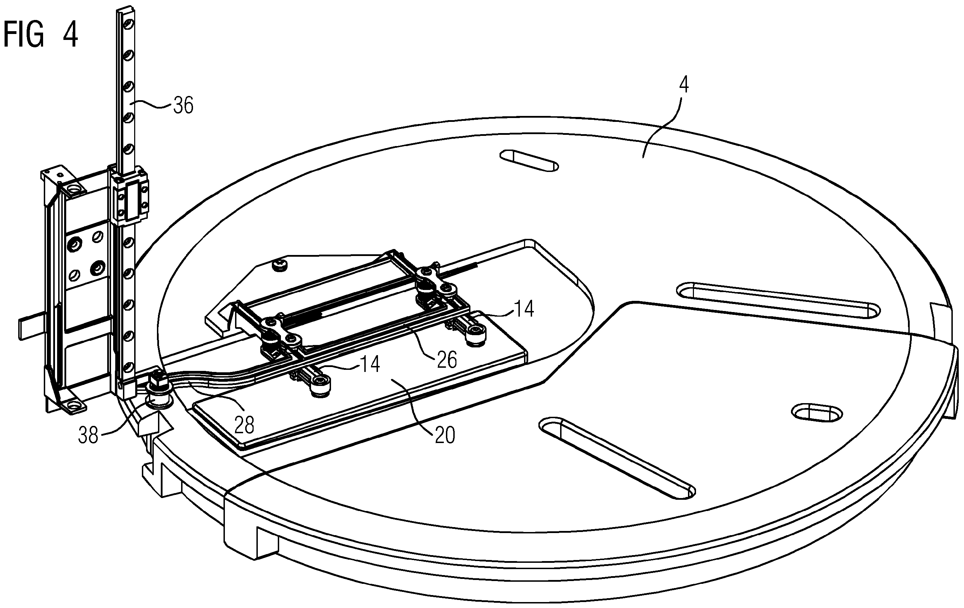

Die FIG 4 bis 6 zeigen einen beweglichen Transferarm 36, an dem ein Greifer zum Transfer von Reagenzbehältern oder eine Pipettiereinrichtung befestigt werden kann. Der Transferarm 36 ist bezogen auf das Rad mit den Reagenzgefäßbehältern in radialer Richtung bewegbar. Eine Bewegung senkrecht zu dieser Richtung ist durch eine nicht näher gezeigte Führung unterbunden. Der Transferarm 36 wird dabei automatisiert von der nicht gezeigten Steuereinrichtung des automatischen Analysegeräts gesteuert.

An dem Transferarm 36 ist eine Rolle 38 befestigt, die auf Höhe der Führungsschiene 26 angeordnet ist und Verschlusselement-seitig in diese eingreift. In der in FIG 4 gezeigten Ruheposition des Transferarms 36 ist die Rolle 38 am Auslauf des abknickenden Abschnitts 28 der Führungsschiene 26 angeordnet.

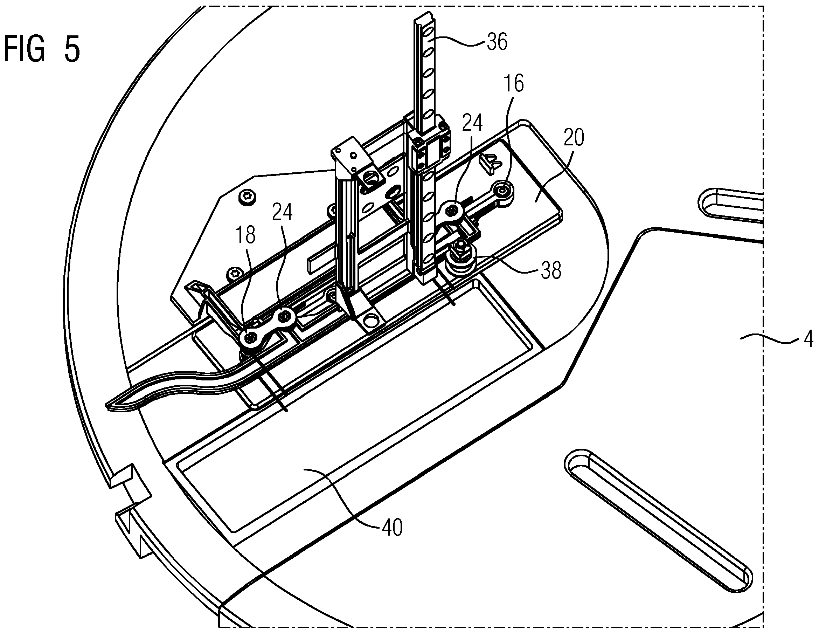

Wird von der Steuereinheit ein Zugriff auf den Reagenzgefäßbehälter veranlasst, fährt der Transportarm 36 in Richtung des Mittelpunkts des Rades. Durch die abknickende Form des Abschnitts 28 wirkt eine Kraft auf die Führungsschiene 26 in Richtung des Befestigungselements 2. Diese Kraft bewirkt eine Verschiebung des Verschlusselements 20. Die Dimensionierung der einzelnen Bauteile ist so gewählt, dass die Hebel 14 eine Bewegung um neunzig Grad absolviert haben, wenn die Rolle 38 den geraden Teil der Führungsschiene 26 erreicht hat. Die Lager 16, 18, 24 liegen dann alle auf einer Linie, und die Verschlussvorrichtung 1 befindet sich in einer vollständigen Offenstellung, gezeigt in FIG 5.

Bewegt sich der Transferarm 36 weiter, wirkt ab dem in FIG 5 gezeigten Punkt nur noch eine Kraft über die Führungsschiene 26 in Richtung des Befestigungselements 2. Das Verschlusselement 20 wird in der geöffneten Position gehalten. Wird der Transferarm 36 wieder zurück bewegt, wird durch die Rückstellkraft der Schenkelfedern 22 das Verschlusselement 20 wieder automatisch in die Geschlossenstellung gebracht.

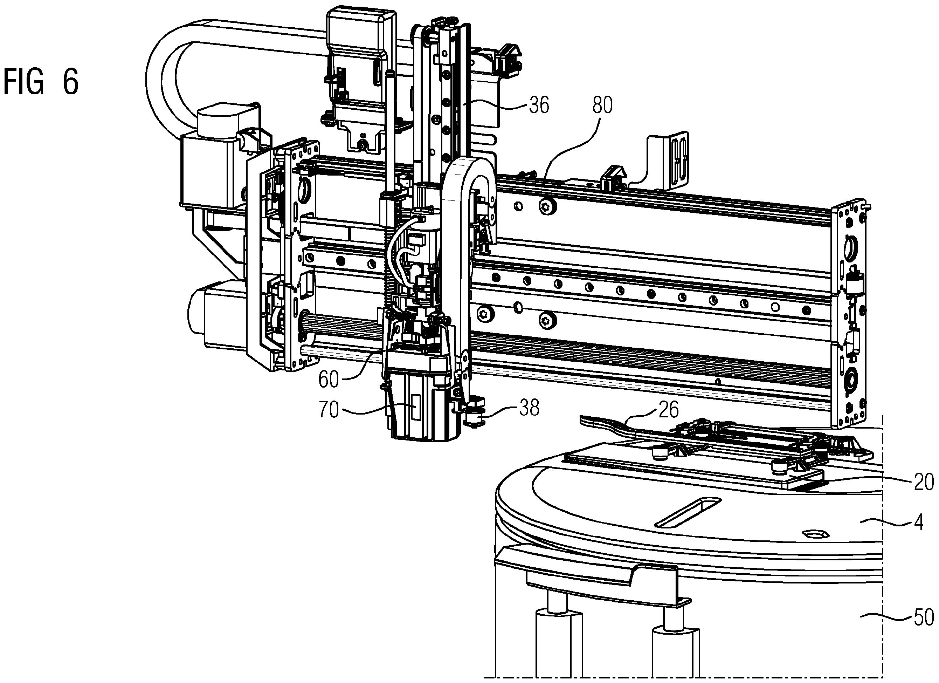

FIG 6 zeigt einen Ausschnitt aus einem automatischen Analysegerät mit einem Reagenzgefäßbehälter 50 und mit einer Vorrichtung 80 zum Einsetzen und zur Entnahme von Reagenzgefäßen in/aus dem Reagenzgefäßbehälter, wobei die besagte Vorrichtung einen Greifer 60 zur Aufnahme eines Reagenzgefäßes 70 aufweist. Der Greifer 60 ist an einem Transferam 36 befestigt, an welchem auch die Rolle 38 befestigt ist. Wird der mit einem Reagenzgefäß 70 beladene Transferarm 36 auf den Reagenzgefäßbehälter 50 zu bewegt, erreicht die Rolle 38 im Grunde mit dem Reagenzgefäß 70 den Bereich des Behälterdeckels 4, der die Öffnung 40 aufweist, durch die Reagenzgefäße 70 in den Reagenzgefäßbehälter 50 einsetzbar und aus dem Reagenzgefäßbehälter 50 entnehmbar sind. Durch Eingreifen der Rolle 38 in die Führungsschiene 26 wird in dem Moment das Verschlusselement in die Offenstellung gebracht, in dem der Greifer 60 die Öffnung 40 erreicht.

### BEZUGSZEICHENLISTE

- 1: Verschlussvorrichtung
- 2: Befestigungselement
- 4: Behälterdeckel
- 6: Montagebohrung
- 8: Grundplatte
- 10: Platte
- 14: Hebel
- 16: Verschlusselement-seitige Lager
- 18: Befestigungselement-seitige Lager
- 20: Verschlusselement
- 22: Rückstellelement Schenkelfeder
- 24: Lager
- 26: Führungsschiene
- 28: Abschnitt
- 30: Vertiefung
- 32: Anschlag
- 34: Dichtung
- 36: Transferarm
- 38: Rolle
- 40: Öffnung
- 50: Reagenzgefäßbehälter
- 60: Greifer
- 70: Reagenzgefäß
- 80: Vorrichtung zum Einsetzen und zur Entnahme von Reagenzgefäßen

## Patentansprüche

1. Vorrichtung (1) zum Verschluss einer Öffnung (40) in einem Behälterdeckel (4), besagte Vorrichtung (1) umfassend
- ein Befestigungselement (2) zur Befestigung der Vorrichtung (1) an dem Behälterdeckel (4),
- ein Verschlusselement (20), das mit dem Befestigungselement (2) beweglich verbunden ist und das in einer Geschlossenstellung die Öffnung (40) des Behälterdeckels (4) bedeckt und in einer Offenstellung die Öffnung (40) des Behälterdeckels (4) nicht bedeckt,
- eine Führungsschiene (26), die mit dem Befestigungselement (2) und mit dem Verschlusselement (20) jeweils beweglich verbunden ist und auf die eine Horizontalkraft einwirken kann, wodurch das Verschlusselement (20) von der Geschlossenstellung in die Offenstellung beweglich ist,
wobei das Befestigungselement (2) und das Verschlusselement (20) über ein Paar parallel angeordneter Hebel (14) verbunden sind, die jeweils in einem Befestigungselement-seitigen Lager (18) und in einem Verschlusselement-seitigen Lager (16) drehbar gelagert sind, wobei die Lager (18, 16) eine Drehachse senkrecht zum Verschlusselement (20) aufweisen und
wobei die Führungsschiene (26) an den Hebeln (14) über jeweils ein Lager (24) drehbar gelagert ist und wobei jedes Lager (24) eine Drehachse senkrecht zum Verschlusselement (20) aufweist.

2. Vorrichtung (1) nach Anspruch 1, wobei die Führungsschiene (26) parallel zu einer gedachten Linie zwischen den Verschlusselement-seitigen Lagern (16) angeordnet ist.

3. Vorrichtung (1) nach einem der vorhergehenden Ansprüche, wobei die Führungsschiene (26) entlang ihrer Längsachse einen ersten, in Richtung des Befestigungselements (2) abknickenden Abschnitt (28) und einen zweiten, geraden Abschnitt aufweist.

4. Vorrichtung (1) nach einem der vorhergehenden Ansprüche, ferner umfassend mindestens ein Rückstellelement (22), das mindestens einem der Lager (18, 16, 24) zugeordnet ist und das bewirkt, dass das Verschlusselement (20) von der Offenstellung in die Geschlossenstellung bewegt wird.

5. Vorrichtung (1) nach Anspruch 4, bei der der Geschlossenstellung ein Anschlag (32) zugeordnet ist, das Rückstellelement (22) eine Kraft in Richtung des Anschlags (32) ausübt und der abknickende Abschnitt (28) auf der Seite der Führungsschiene (26) angeordnet ist, in deren Richtung die Kraft wirkt.

6. Vorrichtung (1) nach einem der Ansprüche 4 und 5, bei der das Rückstellelement (22) ein Federelement, vorzugsweise eine Schenkelfeder, Zugfeder oder Druckfeder ist, deren erster Schenkel mit dem Befestigungselement (2) und deren zweiter Schenkel mit einem der Hebel (14) verbunden sind.

7. Vorrichtung (1) nach einem der vorhergehenden Ansprüche, bei der der abknickende Abschnitt (28) der Führungsschiene (26) wellenförmig ausgestaltet ist.

8. Behälterdeckel (4) mit mindestens einer Öffnung (40), **dadurch gekennzeichnet, dass** eine Vorrichtung (1) gemäß einem der vorhergehenden Ansprüche an der Öffnung (40) angeordnet ist.

9. Behälterdeckel (4) nach Anspruch 8, wobei der Rand der Öffnung (40) geneigt ist und das Verschlusselement (20) eine der Randneigung entsprechende Keilform aufweist.

10. Reagenzgefäßbehälter (50) für ein automatisches Analysegerät, umfassend einen Behältderdeckel (4) gemäß einem der Ansprüche 8 und 9.

11. Reagenzgefäßbehälter (50) nach Anspruch 10, ferner umfassend ein drehbares Rad mit Aufnahmepositionen für Reagenzgefäße (70), wobei sich die Öffnung (40) des Behälterdeckels (4) ausgehend vom Mittelpunkt des Aufnahmerades in radialer Richtung erstreckt.

12. Automatisches Analysegerät mit einem Reagenzgefäßbehälter (50) nach einem der Ansprüche 10 bis 11 und mit einer Vorrichtung (80) zum Einsetzen und zur Entnahme von Reagenzgefäßen (70) in/aus dem Reagenzgefäßbehälter (50), wobei die besagte Vorrichtung (80) eine Einrichtung zur Aufnahme eines Reagenzgefäßes, vorzugsweise einen Greifer (60), aufweist.

13. Automatisches Analysegerät nach Anspruch 12, wobei die Vorrichtung zum Einsetzen und zur Entnahme von Reagenzgefäßen (70) einen parallel zur Führungsschiene (26) bewegbaren Transferarm (36) umfasst, welcher eine Horizontalkraft auf die Führungsschiene (26) ausüben kann.

14. Automatisches Analysegerät nach Anspruch 13, wobei der Transferarm (36) ein Kontaktelement (38), vorzugsweise eine Rolle, aufweist, das in die Führungsschiene (26) eingreift.

## Claims

1. Device (1) for closing an opening (40) in a container lid (4), said device (1) comprising
- a fastening element (2) for fastening the device (1) on the container lid (4),
- a closure element (20), which is connected movably to the fastening element (2) and which, in a closed position, covers the opening (40) of the container lid (4) and, in an open position, does not cover the opening (40) of the container lid (4),
- a guide rail (26), which is connected movably to the fastening element (2) and to the closure element (20) and on which a horizontal force can act, as a result of which the closure element (20) is movable from the closed position to the open position,
wherein the fastening element (2) and the closure element (20) are connected by a pair of mutually parallel levers (14), which are each mounted rotatably in a fastening-element-side bearing (18) and in a closure-element-side bearing (16), wherein the bearings (18, 16) have a rotation axis perpendicular to the closure element (20), and
wherein the guide rail (26) is mounted rotatably on each of the levers (14) via a respective bearing (24), and wherein each bearing (24) has a rotation axis perpendicular to the closure element (20).

2. Device (1) according to Claim 1, wherein the guide rail (26) is arranged parallel to an imaginary line between the closure-element-side bearings (16).

3. Device (1) according to one of the preceding claims, wherein the guide rail (26) has, along the longitudinal axis thereof, a first portion (28) curving in the direction of the fastening element (2), and a second, rectilinear portion.

4. Device (1) according to one of the preceding claims, further comprising at least one restoring element (22), which is assigned to at least one of the bearings (18, 16, 24) and has the effect that the closure element (20) is moved from the open position to the closed position.

5. Device (1) according to Claim 4, in which the closed position is assigned a limit stop (32), the restoring element (22) exerts a force in the direction of the limit stop (32), and the curving portion (28) is arranged on that side of the guide rail (26) in the direction of which the force acts.

6. Device (1) according to either of Claims 4 and 5, in which the restoring element (22) is a spring element, preferably a leg spring, tension spring or compression spring, of which the first leg is connected to the fastening element (2), and of which the second leg is connected to one of the levers (14).

7. Device (1) according to one of the preceding claims, in which the curving portion (28) of the guide rail (26) is wave-shaped.

8. Container lid (4) with at least one opening (40), **characterized in that** a device (1) according to one of the preceding claims is arranged on the opening (40).

9. Container lid (4) according to Claim 8, wherein the edge of the opening (40) is inclined, and the closure element (20) has a wedge shape corresponding to the edge incline.

10. Reagent vessel container (50) for an automatic analysis apparatus, comprising a container lid (4) according to either of Claims 8 and 9.

11. Reagent vessel container (50) according to Claim 10, further comprising a rotatable wheel with receiving positions for reagent vessels (70), wherein the opening (40) of the container lid (4) extends in the radial direction starting from the center point of the receiving wheel.

12. Automatic analysis apparatus with a reagent vessel container (50) according to one of Claims 10 through 11, and with a device (80) for insertion and removal of reagent vessels (7) into and out of the reagent vessel container (50), wherein said device (80) has a mechanism for receiving a reagent vessel, preferably a gripper (60).

13. Automatic analysis apparatus according to Claim 12, wherein the device for insertion and removal of reagent vessels (70) comprises a transfer arm (36), which is movable parallel to the guide rail (26) and which can exert a horizontal force on the guide rail (26).

14. Automatic analysis apparatus according to Claim 13, wherein the transfer arm (36) has a contact element (38), preferably a roller, which engages in the guide rail (26).

## Revendications

1. Dispositif (1) de fermeture d'une ouverture (40) d'un couvercle (4) de récipient, ledit dispositif (1) comprenant
- un élément (2) de fixation pour fixer le dispositif (1) au couvercle (4) du récipient,
- un élément (20) de fermeture, qui est relié, de manière amovible, à l'élément (2) de fixation et qui recouvre, en une position fermée, l'ouverture (40) du couvercle (4) du récipient et qui, en une position ouverte, ne recouvre pas l'ouverture (40) du couvercle (4) du récipient,
- un rail (26) de guidage, qui est relié, de manière amovible, respectivement à l'élément (2) de fixation et à l'élément (20) de fermeture et sur lequel peut s'appliquer une force horizontale, grâce à quoi l'élément (20) de fermeture peut passer de la position fermée à la position ouverte,
dans lequel l'élément (2) de fixation et l'élément (20) de fermeture sont reliés par une paire de leviers (14) parallèles, qui sont montés tournant chacun dans un palier (18) du côté de l'élément de fixation et dans un palier (16) du côté de l'élément de fermeture, les paliers (18, 16) ayant un axe de rotation perpendiculaire à l'élément (20) de fermeture et
dans lequel le rail (26) de guidage est monté tournant sur le levier (14) par respectivement un palier (24) et dans lequel chaque palier (24) a un axe de rotation perpendiculaire à l'élément (20) de fermeture.

2. Dispositif (1) suivant la revendication 1, dans lequel le rail (26) de guidage est disposé parallèlement à une ligne imaginaire entre les paliers (16) du côté de l'élément de fermeture.

3. Dispositif (1) suivant l'une des revendications précédentes, dans lequel le rail (26) de guidage a, le long de son axe longitudinal, un premier tronçon (28) se coudant en direction de l'élément (2) de fixation et un deuxième tronçon droit.

4. Dispositif (1) suivant l'une des revendications précédentes, comprenant, en outre, au moins un élément (22) de rappel, qui est associé à au moins l'un des paliers (18, 16, 24) et qui fait que l'élément (20) de fermeture passe de la position ouverte à la position fermée.

5. Dispositif (1) suivant la revendication 4, dans lequel, à la position fermée est associée une butée (32), l'élément (22) de rappel applique une force en direction de la butée (32) et le tronçon (28) coudé est disposé du côté du rail (26) de guidage en direction duquel s'applique la force.

6. Dispositif (1) suivant l'une des revendications 4 et 5, dans lequel l'élément (22) de rappel est un élément à ressort, de préférence un ressort à branche, un ressort de traction ou un ressort de compression, dont la première branche est reliée à l'élément (2) de fixation et dont la deuxième branche est reliée à l'un des leviers (14).

7. Dispositif (1) suivant l'une des revendications précédentes, dans lequel le tronçon (28) coudé du rail (26) de guidage est de forme ondulée.

8. Couvercle (4) de récipient ayant au moins une ouverture (40), **caractérisé en ce qu'**un dispositif (1) suivant l'une des revendications précédentes est disposé sur l'ouverture (40).

9. Couvercle (4) de récipient suivant la revendication 8, dans lequel le bord de l'ouverture (40) est incliné et l'élément (20) de fermeture a une forme en coin correspondant à l'inclinaison du bord.

10. Récipient (50) d'éprouvettes de réactif sur un appareil d'analyse automatique, comprenant un couvercle (4) de récipient suivant l'une des revendications 8 et 9.

11. Récipient (50) d'éprouvettes de réactif suivant la revendication 10, comprenant, en outre, une roue tournante ayant des positions de réception d'éprouvettes (70) de réactif, l'ouverture (40) du couvercle (4) du récipient s'étendant en direction radiale à partir du centre de la roue de réception.

12. Appareil d'analyse automatique, comprenant un récipient (50) d'éprouvettes de réactif suivant l'une des revendications 10 à 11 et comprenant un dispositif (80) pour insérer des éprouvettes (70) de réactif dans le récipient (50) d'éprouvettes de réactif ou pour en retirer, ledit dispositif (80) ayant un dispositif de réception d'une éprouvette de réactif, de préférence un dispositif (60) de préhension.

13. Appareil d'analyse automatique suivant la revendication 12, dans lequel le dispositif comprend, pour l'insertion et pour le retrait d'éprouvette (70) à réactif, un bras (36) de transfert mobile parallèlement au rail (26) de guidage et pouvant appliquer une force horizontale au rail (26) de guidage.

14. Appareil d'analyse automatique suivant la revendication 13, dans lequel le bras (36) de transfert a un élément (38) de contact, de préférence un galet, qui pénètre dans le rail (26) de guidage.
